# EUROPÄISCHE PATENTSCHRIFT

(11) **EP 1 674 785 B1**
(45) Veröffentlichungstag und Bekanntmachung des Hinweises auf die Patenterteilung: **20.08.2008**
(21) Anmeldenummer: 05027749.0
(22) Anmeldetag: 19.12.2005
(51) Int. Cl.: F16P 3/14, G01V 8/12

(54) **Optoelektronischer Sensor und Verfahren zur Absicherung einer Maschine**
Optoelectronic sensor and method for securing a machine
Détecteur optoélectronique et méthode de sécurisation d'une machine

(30) Priorität: 21.12.2004 DE 102004061532
(43) Veröffentlichungstag der Anmeldung: 28.06.2006
(73) Patentinhaber: SICK AG, 79183 Waldkirch (DE)
(72) Erfinder: Braune, Ingolf, 79194 Gundelfingen (DE)
(74) Vertreter: Manitz, Finsterwald & Partner GbR

(56) Entgegenhaltungen:
- EP-A- 1 281 986
- EP-A- 1 291 573
- DE-A1- 10 309 399

## Beschreibung

Die Erfindung betrifft einen optoelektronischen Sensor gemäß des Oberbegriffs des Anspruchs 1.

Die Erfindung betrifft ferner ein Verfahren zur Absicherung einer Maschine gemäß dem Oberbegriff des Anspruchs 10. Ein solches Verfahren ist aus dem Dokument EP-A-1 281 986 bekannt und arbeitet mit einem Schutzfeld, dessen Abmessungen während der gesamten Arbeitsbewegung weniger als 50 % des maximal überwachbaren Schutzfeldes betragen.

Bei den erfindungsgemäß zu überwachenden Maschinen handelt es sich typischerweise um Gesenkpressen, Scheren und Stanzen zum Biegen, Abkanten, Schneiden oder Stanzen von Werkstücken, wie z.B. Blechteilen. Das genannte erste Werkzeugteil ist in diesem Fall durch ein Oberwerkzeug gebildet, das eine längliche Biegelinie oder Schnittkante besitzt. Dieses Oberwerkzeug wird während seiner Arbeitsbewegung vertikal nach unten gegen ein Unterwerkzeug bewegt, das als zweites Werkzeugteil dient und an dem das Werkstück anliegt oder aufliegt.

Für jeden Bearbeitungsvorgang muss zunächst das zuvor bearbeitete Werkstück entnommen und das neu zu bearbeitende Werkstück in den Öffnungsspalt zwischen den Werkzeugteilen eingeführt werden. Dies erfolgt manuell durch eine Bedienperson. Um während des Schließens des Öffnungsspalts eine Verletzung insbesondere der Hände der Bedienperson zu vermeiden, überwacht der optoelektronische Sensor ein Schutzfeld, das sich im Falle einer Gesenkpresse typischerweise unterhalb des bewegten Oberwerkzeugs erstreckt. Dieses Schutzfeld besitzt eine gewisse Ausdehnung, d.h. sein Umriss erstreckt sich entlang eines zweidimensionalen Querschnitts, welcher in einer senkrecht zur Biege- oder Schnittlinie verlaufenden Ebene liegt, so dass der Sensor auf Eingriffe aus verschiedenen Richtungen schnell und zuverlässig reagieren kann.

Eine derartige Sicherung von Werkzeugmaschinen hat sich bewährt, um die erläuterte Verletzungsgefahr zu verringern. Andererseits besteht natürlich die Bemühung, dass die Arbeitsbewegungen des ersten Werkzeugsteils möglichst schnell ausgeführt werden können, so dass die Werkzeugmaschine mit einem hohen Arbeitstakt arbeiten kann. Ein erhöhter Arbeitstakt steht jedoch in einem gewissen Konflikt zu der Überwachung eines großen Schutzfeldes, da bei einem großen Schutzfeld zum einen an sich ungefährliche Justierungen des Werkstücks durch die Bedienperson bereits zu einem unerwünschten Abschaltvorgang führen können und zum anderen eine hohe Datenmenge in Echtzeit verarbeitet werden muss.

Es ist eine Aufgabe der Erfindung, einen optoelektronischen Sensor und ein Verfahren zur Absicherung einer Maschine zu schaffen, die eine Überwachung mit einem verringerten Aufwand ermöglichen.

Diese Aufgabe wird erfindungsgemäß durch die Merkmale des Anspruchs 1 und auch durch ein Verfahren gemäß Anspruch 10 gelöst.

Erfindungsgemäß wurde also berücksichtigt, dass es für die Realisierung einer sicheren Überwachungsfunktion nicht unbedingt nötig ist, während der gesamten Arbeitsbewegung das komplette Gesichtsfeld des Sensors zu überwachen, sondern dass es für die meisten Anwendungsfälle vollkommen ausreichend ist, wenn das Schutzfeld auf besonders kritische Bereiche beschränkt wird, die in der Summe weniger als 50 % des Gesichtsfeldes des Sensors ausmachen. Durch diese Beschränkung des Schutzfeldes wird erreicht, dass sich die Menge der für die Überwachungsfunktion auszuwertenden Daten gegenüber einer Überwachung des kompletten Gesichtsfeldes auf die Hälfte oder weniger als die Hälfte verringert, so dass es möglich wird, den Auswerteprozess erheblich zu beschleunigen und/oder den für die Auswertung zu betreibenden schaltungstechnischen Aufwand zu verringern.

Falls man die so reduzierte Datenmenge dazu nutzt, die Auswertegeschwindigkeit zu erhöhen, wird es möglich, die Maschine insbesondere zu Beginn der Arbeitsbewegung, während dessen die Werkzeugteile vorerst noch ohne direkte Einwirkung auf das Werkstück vergleichsweise schnell aufeinander zu bewegt werden, mit hoher Geschwindigkeit zu betreiben, da auch bei solch hohen Geschwindigkeiten die Auswertung des Schutzfeldes ausreichend schnell in Echtzeit erfolgen kann. Dieser Vorteil ist insbesondere dadurch erzielbar, dass bereits zu Beginn der Arbeitsbewegung das aktive Schutzfeld deutlich kleiner ist als das Gesichtsfeld des Sensors, wobei es besonders bevorzugt ist, wenn diese Bedingung zu jedem Zeitpunkt der Arbeitsbewegung der Maschine erfüllt ist.

Bei einer besonders vorteilhaften Ausführungsform der Erfindung ist eine Steuereinheit vorgesehen, welche dazu geeignet ist, das aktive Schutzfeld innerhalb des Gesichtsfeldes des optoelektronischen Sensors während der Arbeitsbewegung zu verschieben. Mittels einer solchen Steuereinheit wird es möglich, das aktive Schutzfeld zu jedem Zeitpunkt der Arbeitsbewegung so zu positionieren, dass einerseits jeweils vorhandene gefährliche Bereiche durch das Schutzfeld ausreichend gesichert sind und andererseits solche Bereiche vom Schutzfeld ausgenommen sind, in die gefahrlos eingegriffen werden kann oder innerhalb derer sich das Werkstück bei seiner Bearbeitung bewegen muss. Es lässt sich somit ein optimaler Schutz bei gleichzeitig ungestörter Arbeitsbewegung der Maschine realisieren.

In vielen Anwendungsfällen ist es sinnvoll, wenn sich das Schutzfeld nicht in gleichem Maße innerhalb des Vorraums und innerhalb des Rückraums der Maschine, d.h. vor und hinter der Schnittkante bzw. Biegelinie eines Werkzeugs, erstreckt. Wenn nämlich das Schutzfeld in der genannten Weise unsymmetrisch angeordnet wird, ist es möglich, die Abmessungen des Schutzfeldes z.B. im Vorraum der Maschine, also auf der Werkerseite, von der ein Benutzer in die Maschine eingreifen kann, gegenüber dem Rückraum zu vergrößern, so dass sich für den Benutzer ein verbesserter Schutz ergibt.
Dieser Vorteil wird dann auch erreicht, wenn in bestimmten Anwendungsfällen mit Schutzfeldern gearbeitet wird, deren Ausdehnung mehr als 50 % des maximal überwachbaren Gesichtsfeldes beträgt.

Im Extremfall kann das Schutzfeld so angeordnet werden, dass es sich beispielsweise ausschließlich innerhalb des Vorraums der Maschine erstreckt. Ebenso kann das Schutzfeld aber auch komplett im Rückraum der Maschine liegen, um so beispielsweise feststellen zu können, ob ein vom Vorraum her in den Arbeitsbereich der Maschine hineinbewegtes Körperteil eines Benutzers bis in den Rückraum hineinragt, damit in diesem Fall dann ein Abschalten der Maschine erfolgen kann.

Die Größe des Schutzfeldes kann insbesondere auch dann, wenn es innerhalb des Gesichtsfeldes bewegt wird, während der gesamten Arbeitsbewegung konstant sein, so dass die von der Auswerteeinheit zu verarbeitende Datenmenge pro Zeiteinheit immer gleich groß ist.

Erfindungsgemäß besteht das Schutzfeld aus mehreren, nicht zusammenhängenden, innerhalb des Gesichtsfeldes des optoelektronischen Sensors liegenden, streifenförmig Segmenten. Auch diese Segmente können mittels der erwähnten Steuereinheit während der Arbeitsbewegung innerhalb des Gesichtsfeldes des optoelektronischen Sensors verschoben werden. Die Größe der einzelnen Segmente ist bevorzugt während der gesamten Arbeitsbewegung konstant. Durch die genannte Aufteilung des Schutzfeldes in einzelne Segmente wird es möglich, letztlich einen relativ großen Bereich zu überwachen, ohne dass tatsächlich jeder Punkt bzw. jedes Pixel des Bereichs zum auszuwertenden Schutzfeld gehört. Wenn nämlich die einzelnen Segmente beispielsweise derart voneinander beabstandet werden, dass der Zwischenraum zwischen den einzelnen Segmenten so bemessen ist, dass er kleiner ist als eine Fingerbreite, kann dennoch sichergestellt werden, dass ein in einen gefährlichen Bereich hineinragender Finger zuverlässig erkannt wird. Gleichzeitig wird jedoch die zu verarbeitende Datenmenge deutlich reduziert, da nur die von den Segmenten herrührenden Daten zu verarbeiten sind und diejenigen Daten, die die Zwischenräume zwischen den Segmenten betreffen, unberücksichtigt bleiben können.

Vorteilhaft ist es, wenn ein einzelnes Segment oder auch mehrere Segmente während eines Teils der Arbeitsbewegung deaktivierbar sind. Auf diese Weise kann beispielsweise beim Biegen eines Kastens dem Umstand Rechnung getragen werden, dass sich der Kasten während des Biegevorgangs in vorhersehbarer Weise in das Gesichtsfeld des Sensors hineinbewegt und dabei aber kein Abschalten der Maschine ausgelöst werden soll. Insofern sind diejenigen Segmente, die denjenigen Bereich des Gesichtsfeldes des Sensors betreffen, in die sich Kastenteile hineinbewegen, beispielsweise am Ende der Arbeitsbewegung, wenn die entsprechende Bewegung des Kastens erfolgt, deaktivierbar.

Alternativ oder zusätzlich kann die Steuereinheit so ausgelegt werden, dass während der Arbeitsbewegung die Relativposition der Segmente zueinander innerhalb des Gesichtsfeldes des optoelektronischen Sensors verändert wird. Eine solche Veränderung der Positionen der Segmente kann dazu benutzt werden, bestimmte Bereiche des Gesichtsfeldes des Sensors zu bestimmten Phasen der Arbeitsbewegung nicht zu überwachen, andere Bereiche jedoch beispielsweise verstärkt zu überwachen. Alternativ ist es jedoch auch möglich, die Relativposition der Segmente zueinander während der gesamten Arbeitsbewegung konstant zu halten, was einen vereinfachten Auswertealgorithmus ermöglicht.

Besonders bevorzugt ist es, wenn die streifenförmigen Segmente des Schutzfeldes parallel oder senkrecht zur Richtung der Arbeitsbewegung erstrecken. Ebenso können die streifenförmigen Segmente aber auch schräg zur Richtung der Arbeitsbewegung verlaufen oder beliebige andere Formen besitzen. Auch der Einsatz eines Schachbrettmusters anstelle eines streifenförmigen Musters ist möglich. Im Sinne der Erfindung gilt auch ein Schachbrettmuster als ein Muster, welches aus mehreren, nicht zusammenhängenden Segmenten besteht, obwohl sich diese Segmente in deren Eckbereichen berühren.

Vorteilhaft ist es ferner, wenn zumindest zwei Gruppen von Segmenten zumindest während eines Teils der Arbeitsbewegung alternierend aktivierbar sind. Ebenso können auch mehr als zwei Segmentgruppen vorgesehen werden, die einzeln nacheinander, in einem regelmäßigen Turnus, aktiviert werden. Dabei können sich die zwei oder mehr Gruppen von Segmenten zu einem zumindest weitgehend lückenlosen Schutzfeld ergänzen, welches einen Teil oder aber auch den gesamten Bereich des Gesichtsfeldes des optoelektronischen Sensors abdecken kann.

Bei dieser erfindungsgemäßen Variante müssen nacheinander immer nur die Daten jeweils einer Gruppe von Segementen in Echtzeit ausgewertet werden, so dass sich auch hier die erfindungsgemäßen Vorteile ergeben.

Die Erfindung erstreckt sich schließlich auch auf ein Verfahren zum Betrieb der beschriebenen Vorrichtung. Bei einem solchen Verfahren ist es besonders bevorzugt, wenn während der Arbeitsbewegung jeweils alle Pixel des Empfangselements des optoelektronischen Sensors ausgelesen, jedoch nur die jeweils dem aktiven Schutzfeld zugeordneten Pixel ausgewertet werden. Das Auslesen der Pixel erfordert nämlich im Gegensatz zu deren Auswertung keinen zusätzlichen großen Zeitaufwand, so dass es von Vorteil ist, wenn grundsätzlich immer alle Pixel für die Auswertung zur Verfügung stehen und nur diejenigen Pixel ausgewertet werden, die momentan gerade dem Schutzfeld zugeordnet sind. Dies ist insbesondere von Vorteil, wenn sich das Schutzfeld während der Arbeitsbewegung innerhalb des Gesichtsfeldes des Sensors verändert.

Weitere Ausführungsformen der Erfindung sind in den Unteransprüchen genannt. Die Erfindung wird nachfolgend beispielhaft unter Bezugnahme auf die Zeichnungen erläutert.
- Fig. 1: zeigt eine schematische Frontansicht einer Gesenkbiegepresse, und
- Fig 2-11: zeigen jeweils eine schematische Seiteransicht von Teilen dieser Gesentzbiegepresse mit anterschiedlichen schutzfeldern.
- Fig. 12 - 15: zeigen jeweils eine schematische Seitenansicht von Teilen dieser Gesenkbiegepresse mit unterschiedlich, jeweils erfindungsgemäß gestalteten Schutzfeldern.

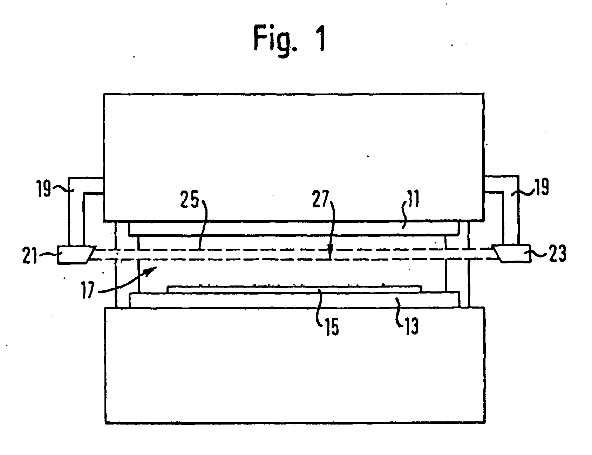

Die in Fig. 1 gezeigte Gesenkbiegepresse besitzt ein Oberwerkzeug 11, das zu einer Arbeitsbewegung vertikal nach unten gegen ein Unterwerkzeug 13 angetrieben werden kann, um ein auf dem Unterwerkzeug 13 aufliegendes Werkstück 15 zu biegen. Während dieser Arbeitsbewegung wird ein Öffnungsspalt 17 zwischen dem Oberwerkzeug 11 und dem Werkstück 15 allmählich geschlossen.

An den beiden Seiten des Oberwerkzeugs 11 ist jeweils ein Haltearm 19 vorgesehen. Die Haltearme 19 tragen eine Sendeeinrichtung 21 und eine ortsauflösende Empfangseinrichtung 23, die Teile eines optoelektronischen Sensors sind. Die Sendeeinrichtung 21 besitzt eine Laserdiode mit einer Sendeoptik (in den Figuren nicht gezeigt), die das Sendelicht der Laserdiode zu einem Lichtstrahl 25 aufweitet. Anstelle einer Laserdiode können hier beliebige andere Leuchtmittel, beispielsweise auch Leuchtdioden, zum Einsatz gelangen. Die Empfangseinrichtung 23 besitzt einen Matrix-Empfänger, der von dem Lichtstrahl 25 beaufschlagt wird.

Der Lichtstrahl 25 durchquert den Öffnungsspalt 17 unterhalb des Oberwerkzeugs 11. Der sich senkrecht zur Zeichenebene erstreckende Umriss des aktivierten Teils der Empfangseinrichtung 23 definiert innerhalb des Lichtstrahls 25 somit ein volumenförmiges Schutzfeld 27 zwischen dem Oberwerkzeug 11 und dem Unterwerkzeug 13, wie nachfolgend noch erläutert wird. Sobald eine Auswerte- und Steuereinrichtung des Sensors (in den Figuren nicht gezeigt) eine Unterbrechung des Lichtstrahls 25 innerhalb des Schutzfelds 27 detektiert, löst sie einen Abschaltvorgang zum Anhalten des Oberwerkzeugs 11 aus. Dadurch wird eine Bedienperson, die beispielsweise das Werkstück 15 in den Öffnungsspalt 17 einführt, vor Verletzungen durch das Oberwerkzeug 11 geschützt.

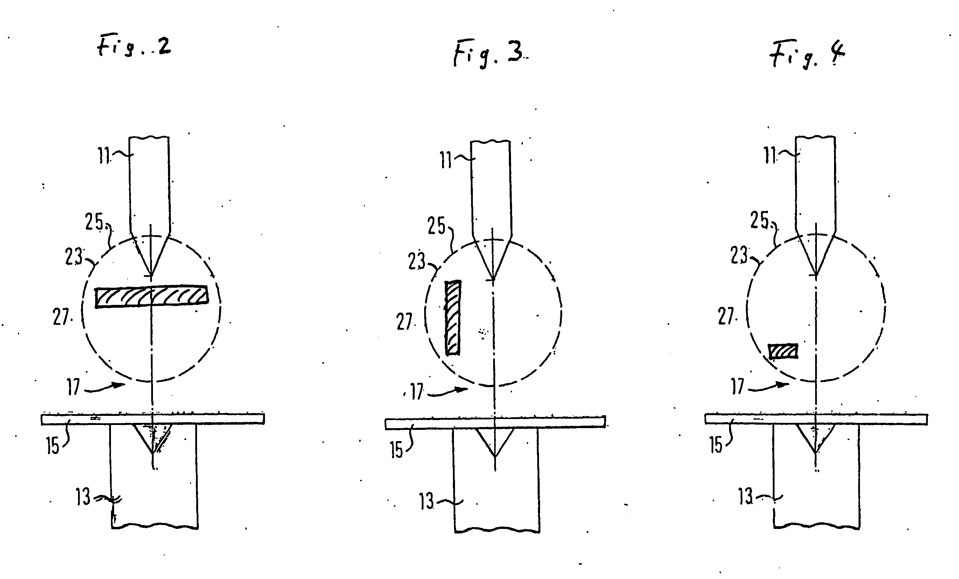

Die Fig. 2 bis 15 zeigen jeweils das Oberwerkzeug 11, das Unterwerkzeug 13, das darauf aufliegende Werkstück 15, den im Querschnitt kreisrunden Lichtstrahl 25 sowie die hiervon vollständig beaufschlagte Empfangseinrichtung 23 in einer schematischen Seitenansicht. Von den einzelnen Empfangselementen der Empfangseinrichtung 23 ist gemäß den Figuren 2 bis 15 jeweils nur ein unterschiedlicher Teil aktiviert. Nur diese aktivierten Empfangselemente werden also auf eine Unterbrechung des Lichtstrahls 25 überwacht, um gegebenenfalls einen Abschaltvorgang auszulösen. Die Anordnung dieser aktivierten Empfangselemente bestimmt dabei den Querschnitt des Schutzfelds 27. Somit befindet sich das tatsächlich überwachte Schutzfeld 27 - in den Figuren 2 bis 15 jeweils schraffiert eingezeichnet - innerhalb des Gesichtsfeldes der Empfangseinrichtung 23, wobei dieses Gesichtsfeld jeweils deutlich größer ist als das jeweilige Schutzfeld 27.

Das kreisförmige Gesichtsfeld der Empfangseinrichtung 23 ist in den Fig. 2 bis 15 gestrichelt eingezeichnet. Innerhalb dieses Gesichtsfelds kann ein beliebig ausgebildetes Schutzfeld an beliebigen Positionen vorgesehen werden, solange seine Ausdehnung weniger als 50 % der Gesamtfläche des Gesichtsfelds der Empfangseinrichtung 23 beträgt.

Die Fig. 2 bis 4 zeigen jeweils mögliche Ausbildungen von Schutzfeldern, die aus lediglich einem Streifen bestehen, welcher innerhalb des Gesichtsfeldes des Sensors während der gesamten Arbeitsbewegung eine konstante Position besitzt. Derartige Schutzfelder können sich entweder nur im Vorraum (Fig. 3 und 4) oder nur im Rückraum (nicht gezeigt) oder aber sowohl im Vorraum als auch im Rückraum (Fig. 2) der Maschine erstrecken. Das horizontal verlaufende, streifenförmige Schutzfeld gemäß Fig. 2 erstreckt sich zu gleichen Teilen in den Vorraum und den Rückraum der Maschine, wobei es nicht mittig zwischen dem Oberwerkzeug 11 und dem Unterwerkzeug 13 angeordnet ist. Das Schutzfeld gemäß Fig. 2 bewegt sich beim Betrieb der Maschine mit dem Oberwerkzeug 11 mit.

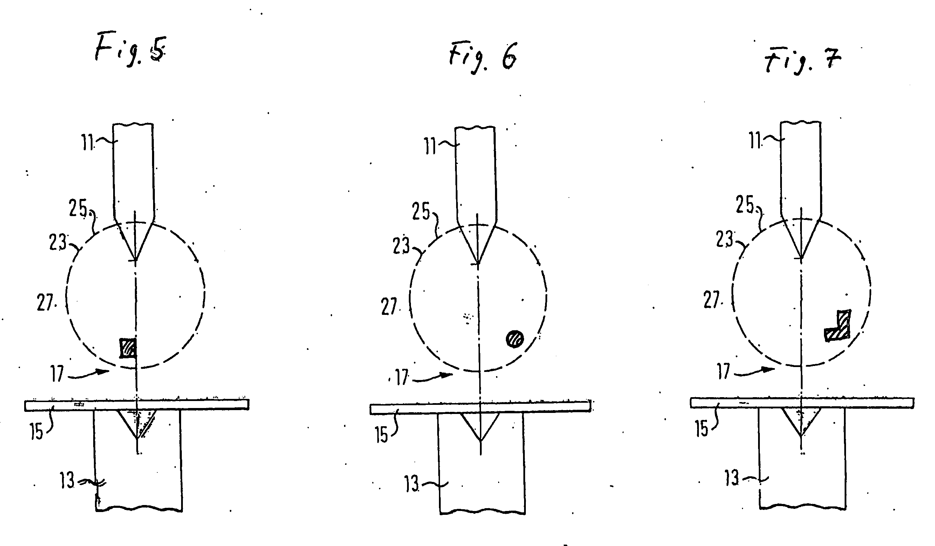

Die Fig. 5 bis 7 zeigen Schutzfelder, deren Abmessung weniger als 10 % der Größe des Gesichtsfelds der Empfangseinrichtung 23 beträgt und die jeweils unterschiedliche Formen aufweisen. Fig. 5 zeigt eine quadratische, Fig. 6 eine kreisrunde und Fig. 7 eine winklige Form des Schutzfelds. Auch diese Schutzfelder sind stationär und unbeweglich im Gesichtsfeld der Empfangseinrichtung 23 angeordnet. Alternativ zu den Ausführungsformen gemäß den Fig. 5 bis 7 können auch beliebige andere Formen von Schutzfeldern zum Einsatz gelangen, die wiederum an beliebigen Positionen innerhalb des Gesichtsfelds der Empfangseinrichtung 23 vorsehbar sind.

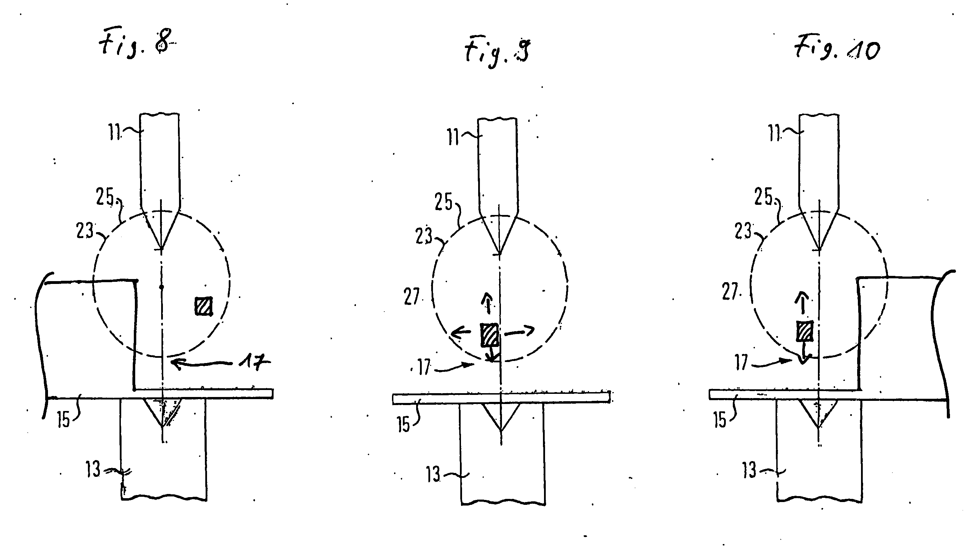

Gemäß Fig. 8 ist das Werkstück als Kasten 15 ausgebildet. In diesem Fall ist - wie auch in den Fig. 5 bis 7 - ein sehr kleines Schutzfeld vorgesehen, welches gemäß Fig. 8 eine quadratische Form besitzt und derart positioniert ist, dass gebogene Teile des Kastens 15 während der Arbeitsbewegung nicht in das Schutzfeld eingreifen und so einen ungewollten Maschinenstopp auslösen.

Gemäß Fig. 9 kann ein Schutzfeld, welches in Fig. 9 lediglich beispielhaft rechteckig dargestellt ist, in beliebige Richtungen innerhalb des Gesichtsfelds der Empfangseinrichtung 23 bewegt werden, was die in Fig. 9 eingezeigten Pfeile veranschaulichen. Durch eine solche, während der Arbeitsbewegung der Maschine stattfindende Verschiebung des Schutzfeldes kann sichergestellt werden, dass sich das Schutzfeld immer an derjenigen Stelle befindet, an der kein Eingriff durch einen Benutzer erfolgen darf, wobei es aber gleichzeitig so positioniert wird, dass es durch bewegte Bereiche des Werkstücks 15 nicht verletzt wird, so dass wiederum kein ungewolltes Anhalten der Maschine erfolgt.

Fig. 10 zeigt eine Variante des Schutzfelds gemäß Fig. 9, welche für das Biegen von Kästen geeignet ist. Gemäß Fig. 10 kann das Schutzfeld zu Beginn der Arbeitsbewegung im unteren Bereich der Empfangseinrichtung 23 angeordnet sein und dann im weiteren Verlauf der Arbeitsbewegung in Richtung des Oberwerkzeugs 11 bewegt werden, um so sicherzustellen, dass der zu biegende Bereich des Kastens 15 nicht ungewollt in das Schutzfeld eingreift.

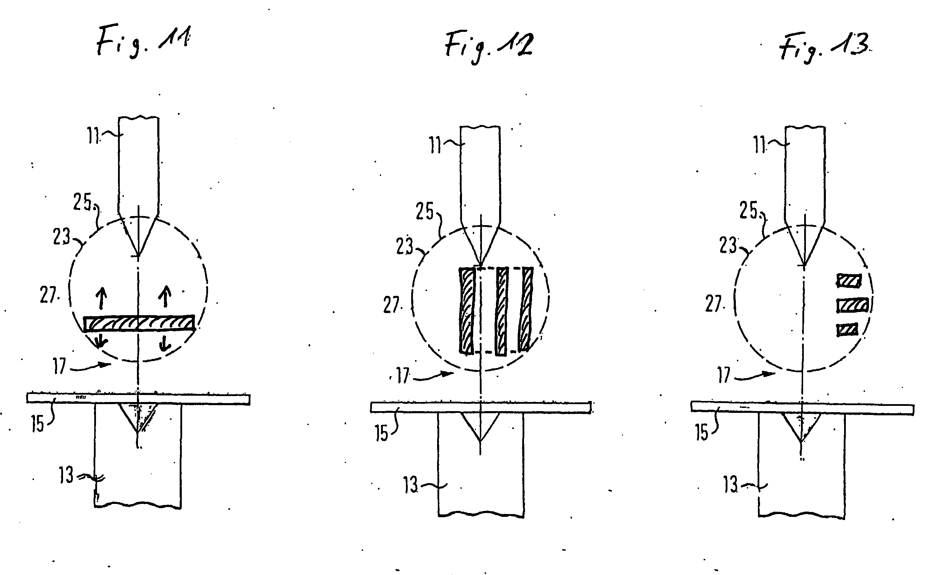

Fig. 11 veranschaulicht, dass nicht nur Schutzfelder mit einer Form gemäß den Fig. 9 und 10, sondern beispielsweise auch langgestreckte, streifenförmige Schutzfelder innerhalb des Gesichtsfelds der Empfangseinrichtung 23 bewegt werden können, um so während einer Arbeitsbewegung den jeweils gerade gefährdeten Bereich sichern zu können.

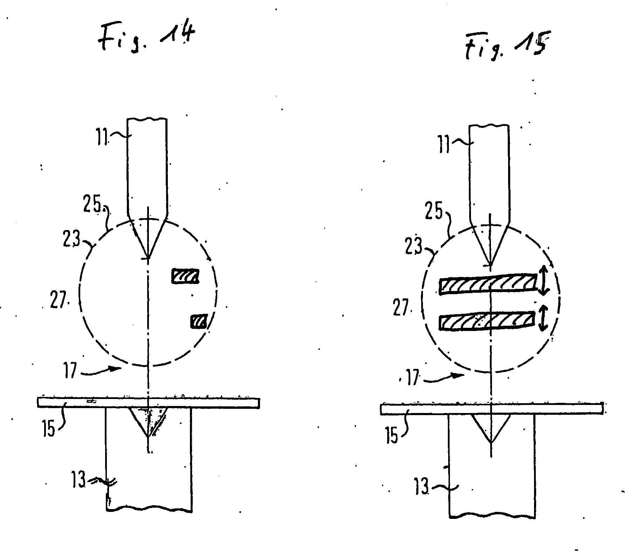

Die Fig. 12 bis 15 veranschaulichen, dass ein erfindungsgemäßes Schutzfeld aus mehreren, nicht zusammenhängenden Segmenten besteht, wobei sich diese Segmente innerhalb des Gesichtsfelds der Empfangseinrichtung 23 an einer konstanten Position befinden können (Fig. 12 bis 14), alternativ hierzu aber auch im Gesichtsfeld bewegbar sind (Fig. 15).

Die in den Fig. 12 bis 15 veranschaulichten Formen von Schutzfeldern sind wiederum nur exemplarisch dargestellt. Es lassen sich beliebige andere Formen oder Anzahlen von Schutzfeldsegmenten realisieren.

Das aus drei vertikal verlaufenden Streifen aufgebaute Schutzfeld gemäß Fig. 12 ermöglicht letztlich die Überwachung eines im Wesentlichen quadratischen, in Fig. 12 gestrichelt eingezeichneten Bereichs, ohne dass hier alle diesem gestrichelten Bereich zugeordneten Pixel der Empfangseinrichtung 23 ausgewertet werden müssten. Dies wird dadurch erreicht, dass die streifenförmigen Segmente des Schutzfeldes so nahe beieinander angeordnet sind, dass in den zwischen den Segmenten ausgebildeten Zwischenräumen keine gefährlichen Eingriffe erfolgen können. Der Abstand der einzelnen Segmente kann beispielsweise ungefähr 14 mm betragen, wodurch sichergestellt wird, dass ein Finger eines Benutzers nicht unerkannt in einen solchen Zwischenraum eindringen kann.

Die in den Fig. 2 bis 8 und 12 bis 14 eingezeichneten stationären Schutzfelder können entweder stationär relativ zum Oberwerkzeug 11, alternativ aber auch stationär relativ zum Unterwerkzeug 13 sein. Im letztgenannten Fall müsste die Vorrichtung gemäß Fig. 1 derart modifiziert werden, dass die Haltearme 19 mit der Sendeeinrichtung 21 und der Empfangseinrichtung 23 nicht mit dem Oberwerkzeug 11 sondern mit dem Unterwerkzeug 13 gekoppelt sind.

### Bezugszeichenliste

- 11: Oberwerkzeug
- 13: Unterwerkzeug
- 15: Werkstück
- 17: Öffnungsspalt
- 19: Haltearm
- 21: Sendeeinrichtung
- 23: Empfangseinrichtung
- 25: Lichtstrahl
- 27: Schutzfeld

## Patentansprüche

1. Optoelektronischer Sensor zur Absicherung einer Maschine, insbesondere einer Biegepresse, mit einem ersten Werkzeugteil (11) zur Durchführung einer Arbeitsbewegung in Richtung eines zweiten Werkzeugteils (13), so dass im Verlauf dieser Arbeitsbewegung ein Öffnungsspalt (17) zwischen den Werkzeugteilen (11, 13) oder zwischen einem Werkzeugteil (11) und einem Werkstück (15) allmählich schließbar ist, wobei der optoelektronische Sensor zur Überwachung eines Schutzfeldes zwischen den Werkzeugteilen (11, 13) ausgelegt ist, so dass bei einem Eingriff in das Schutzfeld von einer Auswerteeinheit ein Schaltsignal, insbesondere zur Unterbrechung der Arbeitsbewegung, erzeugbar ist, und wobei ferner die Ausdehnung des während der Arbeitsbewegung aktiven Schutzfeldes während im Wesentlichen der gesamten Arbeitsbewegung weniger als 50% des vom optoelektronischen Sensor maximal überwachbaren Gesichtsfeldes beträgt,
**dadurch gekennzeichnet ,**
**dass** das Schutzfeld aus mehreren, nicht zusammenhängenden, innerhalb des Gesichtsfeldes des optoelektronischen Sensors liegenden, streifenförmigen Segmenten besteht.

2. Optoelektronischer Sensor nach Anspruch 1,
**dadurch gekennzeichnet ,**
**dass** einer Steuereinheit zur während der Arbeitsbewegung erfolgenden Verschiebung des aktiven Schutzfeldes innerhalb des Gesichtsfeldes des optoelektronischen Sensors vorgesehen ist.

3. Optoelektronischer Sensor nach einem der vorhergehenden Ansprüche,
**dadurch gekennzeichnet ,**
**dass** der im Vorraum der Maschine befindliche Bereich des Schutzfeldes größer ist, als der im Rückraum der Maschine befindliche Bereich des Schutzfeldes.

4. Optoelektronischer Sensor nach einem der vorhergehenden Ansprüche,
**dadurch gekennzeichnet ,**
**dass** sich das Schutzfeld ausschließlich innerhalb des Vorraums oder innerhalb des Rückraums der Maschine erstreckt, und/oder dass die Größe des Schutzfeldes während der gesamten Arbeitsbewegung konstant ist.

5. Optoelektronischer Sensor nach einem der vorhergehenden Ansprüche,
**dadurch gekennzeichnet ,**
**dass** die Steuereinheit zur während der Arbeitsbewegung erfolgenden Verschiebung der Segmente innerhalb des Gesichtsfeldes des optoelektronischen Sensors ausgelegt ist.

6. Optoelektronischer Sensor nach Anspruch 5,
**dadurch gekennzeichnet ,**
**dass** die Größe der Segmente während der gesamten Arbeitsbewegung konstant ist, und/oder
**dass** ein einzelnes Segment oder auch mehrere Segmente während eines Teils der Arbeitsbewegung vollständig oder teilweise deaktivierbar sind.

7. Optoelektronischer Sensor nach einem der Ansprüche 5 oder 6,
**dadurch gekennzeichnet ,**
**dass** die Steuereinheit zur während der Arbeitsbewegung erfolgenden Veränderung der Relativposition der Segmente zueinander innerhalb des Gesichtsfeldes des optoelektronischen Sensors ausgelegt ist, oder
**dass** die Relativposition der Segmente zueinander während der gesamten Arbeitsbewegung konstant ist.

8. Optoelektronischer Sensor nach einem der vorhergehenden Ansprüche,
**dadurch gekennzeichnet ,**
**dass** sich die streifenförmigen Segmente parallel oder senkrecht zur Richtung der Arbeitsbewegung erstrecken.

9. Optoelektronischer Sensor nach einem der vorhergehenden Ansprüche,
**dadurch gekennzeichnet ,**
**dass** zumindest zwei Gruppen von Segmenten zumindest während eines Teils der Arbeitsbewegung alternierend aktivierbar sind, wobei sich insbesondere die zwei Gruppen von Segmenten zu einem zumindest weitgehend lückenlosen Schutzfeld ergänzen.

10. Verfahren zur Absicherung einer Maschine, insbesondere einer Biegepresse, bei dem ein erstes Werkzeugteil (11) eine Arbeitsbewegung in Richtung eines zweiten Werkzeugteils (13) ausführt, so dass im Verlauf dieser Arbeitsbewegung ein Öffnungsspalt (17) zwischen den Werkzeugteilen (11, 13) oder zwischen einem Werkzeugteil (11) und einem Werkstück (15) allmählich geschlossen wird, wobei ein optoelektronischer Sensor ein Schutzfeld zwischen den Werkzeugteilen (11, 13) überwacht, so dass bei einem Eingriff in das Schutzfeld ein Schaltsignal, insbesondere zur Unterbrechung der Arbeitsbewegung, erzeugbar ist, und wobei ferner die Ausdehnung des während der Arbeitsbewegung aktiven Schutzfeldes während im Wesentlichen der gesamten Arbeitsbewegung weniger als 50% des vom optoelektronischen Sensor maximal überwachbaren Gesichtsfeldes beträgt
**dadurch gekennzeichnet ,**
**dass** ein aus mehreren, nicht zusammenhängenden, innerhalb des Gesichtsfeldes des optoelektronischen Sensors liegenden, streifenförmigen Segmenten bestehendes das Schutzfeld überwacht wird.

11. Verfahren nach Anspruch 10,
**dadurch gekennzeichnet ,**
**dass** während der Arbeitsbewegung jeweils alle Pixel des Empfangselements des optoelektronischen Sensors ausgelesen, jedoch nur die jeweils dem aktiven Schutzfeld zugeordneten Pixel ausgewertet werden.

12. Verfahren nach einem der Ansprüche 10 oder 11,
**gekennzeichnet durch**
zumindest einen Verfahrenschritt, welcher mit einem optoelektronischen Sensor nach einem der Ansprüche 2 bis 8 ausführbar ist.

## Claims

1. An optoelectronic sensor for the securing of a machine, in particular of a bending press, having a first tool part (11) for the carrying out of a working movement in the direction of a second tool part (13) such that, in the course of this working movement, an opening gap (17) between the tool parts (11, 13) or between a tool part (11) and a workpiece (15) can gradually be closed, wherein the optoelectronic sensor is designed for the monitoring of a protective field between the tool parts (11, 13) such that, on an intervention into the protective field, a switching signal can be generated by an evaluation unit, in particular for the interruption of the working movement, and wherein the extent of the protective field active during the working movement furthermore amounts to less than 50% of the field of view which can be monitored at a maximum by the optoelectronic sensor during substantially the total working movement,
**characterised in that**
the protective field consists of a plurality of non-contiguous strip-shaped segments disposed within the field of view of the optoelectronic sensor.

2. An optoelectronic sensor in accordance with claim 1, **characterised in that** a control unit is provided for the displacement of the active protective field within the field of view of the optoelectronic sensor occurring during the working movement.

3. An optoelectronic sensor in accordance with any one of the preceding claims, **characterised in that** the region of the protective field located in the space in front of the machine is larger than the region of the protective field located in the space behind the machine.

4. An optoelectronic sensor in accordance with any one of the preceding claims, **characterised in that** the protective field extends only within the space in front of the machine or within the space behind the machine; and/or **in that** the size of the protective field is constant during the total working movement.

5. An optoelectronic sensor in accordance with any one of the preceding claims, **characterised in that** the control unit is designed for the displacement of the segments within the field of view of the optoelectronic sensor which takes place during the working movement.

6. An optoelectronic sensor in accordance with claim 5, **characterised in that** the size of the segments is constant during the total working movement; and/or **in that** an individual segment or also a plurality of segments can be deactivated completely or partly during a part of the working movement.

7. An optoelectronic sensor in accordance with claim 5 or claim 6, **characterised in that** the control unit is designed for the changing of the relative position of the segments with respect to one another within the field of view of the optoelectronic sensor which takes place during the working movement; or **in that** the relative position of the segments with respect to one another is constant during the total working movement.

8. An optoelectronic sensor in accordance with any one of the preceding claims, **characterised in that** the strip-shaped segments extend parallel or perpendicular to the direction of the working movement.

9. An optoelectronic sensor in accordance with any one of the preceding claims, **characterised in that** at least two groups of segments can be activated alternately at least during a part of the working movement, with the two groups of segments in particular complementing one another to form an at least largely gap-free protective field.

10. A method for the securing of a machine, in particular of a bending press, wherein a first tool part (11) carries out a working movement in the direction of a second tool part (13) such that, in the course of this working movement, an opening gap (17) between the tool parts (11, 13) or between a tool part (11) and a workpiece (15) is gradually closed, wherein an optoelectronic sensor monitors a protective field between the tool parts (11, 13) such that, on an intervention into the protective field, a switching signal can be generated, in particular for the interruption of the working movement, and wherein the extent of the protective field active during the working movement furthermore amounts to less than 50% of the field of view which can be monitored at a maximum by the optoelectronic sensor during substantially the total working movement,
**characterised in that**
a protective field consisting of a plurality of non-contiguous strip-shaped segments disposed within the field of view of the optoelectronic sensor is monitored.

11. A method in accordance with claim 10, **characterised in that** all the respective pixels of the receiver element of the optoelectronic sensor are read out during the working movement, but only the respective pixels associated with the active protective field are evaluated.

12. A method in accordance with one of the claims 10 or 11, **characterized by** at least one method step which can be carried out using an optoelectronic sensor in accordance with any one of the claims 2 to 8.

## Revendications

1. Capteur optoélectronique pour sécuriser une machine, en particulier une presse plieuse, comportant une première partie d'outil (11) pour effectuer un mouvement de travail en direction d'une deuxième partie d'outil (13), de telle sorte qu'au cours de ce mouvement de travail une fente d'ouverture (17) entre les parties d'outil (11, 13) ou entre une partie d'outil (11) et une pièce à oeuvrer (15) peut être progressivement fermée, le capteur optoélectronique étant conçu pour surveiller un champ de protection entre les parties d'outil (11, 13), de telle sorte que lors d'une intervention dans le champ de protection un signal de commande, en particulier pour interrompre le mouvement de travail, peut être engendré par une unité d'évaluation, et en outre, l'extension du champ de protection actif pendant le mouvement de travail est, pendant sensiblement tout le mouvement de travail, inférieur à 50 % du champ visuel susceptible d'être surveillé au maximum par le capteur optoélectronique,
**caractérisé en ce que**
le champ de protection est constitué par plusieurs segments en forme de bandes discontinues situés à l'intérieur du champ visuel du capteur optoélectronique.

2. Capteur optoélectronique selon la revendication 1,
**caractérisé en ce que**
il est prévu une unité de commande pour le déplacement du champ de protection actif se produisant pendant le mouvement de travail à l'intérieur du champ visuel du capteur optoélectronique.

3. Capteur optoélectronique selon l'une quelconque des revendications précédentes,
**caractérisé en ce que**
la zone du champ de protection, qui se trouve dans l'espace situé devant la machine, est plus grande que la zone du champ de protection qui se trouve dans l'espace situé derrière la machine.

4. Capteur optoélectronique selon l'une quelconque des revendications précédentes,
**caractérisé en ce que**
le champ de protection s'étend exclusivement à l'intérieur de l'espace situé devant la machine ou à l'intérieur de l'espace situé derrière la machine, et/ou **en ce que** la taille du champ de protection est constante pendant tout le mouvement de travail.

5. Capteur optoélectronique selon l'une quelconque des revendications précédentes,
**caractérisé en ce que**
l'unité de commande est conçue pour le déplacement des segments se produisant pendant le mouvement de travail à l'intérieur du champ visuel du capteur optoélectronique.

6. Capteur optoélectronique selon la revendication 5,
**caractérisé en ce que**
la taille des segments est constante pendant tout le mouvement de travail, et/ou
**en ce qu'**un segment individuel ou aussi plusieurs segments peuvent être totalement ou partiellement désactivés pendant une partie du mouvement de travail.

7. Capteur optoélectronique selon l'une des revendications 5 ou 6,
**caractérisé en ce que**
l'unité de commande est conçue pour la modification de la position relative des segments les uns par rapport aux autres, se produisant pendant le mouvement de travail, à l'intérieur du champ visuel du capteur optoélectronique, ou
**en ce que** la position relative des segments les uns par rapport aux autres est constante pendant tout le mouvement de travail.

8. Capteur optoélectronique selon l'une quelconque des revendications précédentes,
**caractérisé en ce que**
les segments en forme de bandes s'étendent parallèlement ou perpendiculairement à la direction du mouvement de travail.

9. Capteur optoélectronique selon l'une quelconque des revendications précédentes,
**caractérisé en ce que**
au moins deux groupes de segments peuvent être activés en alternance au moins pendant une partie du mouvement de travail, les deux groupes de segments se complétant en particulier pour former un champ de protection au moins amplement sans lacunes.

10. Procédé de sécurisation d'une machine, en particulier d'une presse plieuse, dans lequel une première partie d'outil (11) exécute un mouvement de travail en direction d'une deuxième partie d'outil (13), de telle sorte qu'au cours de ce mouvement de travail, une fente d'ouverture (17) entre les parties d'outil (11, 13) ou entre une partie d'outil (11) et une pièce à oeuvrer (15) est progressivement fermée, un capteur optoélectronique surveillant un champ de protection entre les parties d'outil (11, 13), de telle sorte que lors d'une intervention dans le champ de protection un signal de commande peut être engendré en particulier pour interrompre le mouvement de travail, et en outre, l'extension du champ de protection actif pendant le mouvement de travail est, pendant sensiblement tout le mouvement de travail, inférieure à 50 % du champ visuel susceptible d'être surveillé au maximum par le capteur optoélectronique,
**caractérisé en ce que**
on surveille un champ de protection constitué par plusieurs segments en forme de bandes discontinues, situés à l'intérieur du champ visuel du capteur optoélectronique.

11. Procédé selon la revendication 10,
**caractérisé en ce que**
pendant le mouvement de travail, tous les pixels respectifs de l'élément de réception du capteur optoélectronique sont lus, alors que seuls les pixels associés au champ de protection actif respectif sont évalués.

12. Procédé selon l'une des revendications 10 ou 11,
**caractérisé par** au moins une étape de procédé qui peut être exécutée avec un capteur optoélectronique selon l'une des revendications 2 à 8.
